# EUROPÄISCHE PATENTSCHRIFT

(11) **EP 0 553 621 B1**
(45) Veröffentlichungstag und Bekanntmachung des Hinweises auf die Patenterteilung: **13.05.1998**
(21) Anmeldenummer: 93100207.5
(22) Anmeldetag: 08.01.1993
(51) Int. Cl.: G05B 19/408, G05B 19/414

(54) **Programmierbare Computersteuerung für eine Werkzeugmaschine**
Programmable computer control for a machine tool
Commande programmable par ordinateur pour une machine outil

(30) Priorität: 30.01.1992 DE 4202610
(43) Veröffentlichungstag der Anmeldung: 04.08.1993
(73) Patentinhaber: Traub Drehmaschinen GmbH, 73262 Reichenbach (DE)
(72) Erfinder: Engelhardt, Heinz, W-7066 Baltmannsweiler 2 (DE); Osswald, Ernst, W-7313 Reichenbach (DE); Stumm, Hans Peter, W-7060 Schorndorf 8 (DE)
(74) Vertreter: von Hellfeld, Axel, Dr. Dipl.-Phys.

(56) Entgegenhaltungen:
- EP-A- 0 407 612
- EP-A- 0 466 940
- DE-Z-ENERGIE & AUTOMATION Bd. 1989, Nr. 11, Seiten 6 - 8 WOLFGANG KANZLER 'Sinumerik 805- a cnc automation system for a wide range of application'
- PATENT ABSTRACTS OF JAPAN vol. 014, no. 494 (P-1123)26. Oktober 1990 & JP-A-22 02 604 (FANUC LTD) 10 August 1990

## Beschreibung

Die Erfindung betrifft eine programmierbare Computersteuerung für eine Werkzeugmaschine mit den Merkmalen des Oberbegriffs von Anspruch 1.

Eine solche programmierbare Computersteuerung (auch als "Einrichtung zur rechnergeführten Steuerung von Werkzeugmaschinen" benennbar) ist bekannt.

Die DE 29 27 254 C2 beschreibt eine Einrichtung zur rechnergeführten Steuerung von Werkzeugmaschinen mit einer standartisierten Rechnersteuerung (CNC-Teil) für die Werkzeugmaschine und mit einem zwischen die Rechnersteuerung und die Maschine geschalteten freiprogrammierbaren Anpaßsteuermodul, welches eine Steuerung aufweist, die über Schnittstellen Daten von und zu der Maschine überträgt. Mittels einer Eingabeeinrichtung können Daten vom Benutzer in die Steuerung eingegeben werden, welche mittels einer Anzeigeeinrichtung angezeigt werden, wobei die Anzeigeeinrichtung auch dazu dient, Daten aus der Steuerung selbst darzustellen.

Eine allgemeine Darstellung des Standes der Technik findet sich im Lehrbuch von M. Weck, "Werkzeugmaschinen", Bd. 3 (1989) "Automatisierung- und Steuerungstechnik" Danach werden bei CNC-Werkzeugmaschinen verbindungsprogrammierte Steuerungen und speicherprogrammierte Steuerungen unterschieden. Im letztgenannten Fall werden die Steuerungsfunktionen durch ein Programm (Software) bestimmt, das in einem Speicher abgelegt ist. Die Hardware der Steuerung wird dadurch problemunabhängig und ist somit durch freie Programmierung an unterschiedliche Probleme anpaßbar.

Programmierbare Computersteuerungen für eine Werkzeugmaschine der im Oberbegriff des Patentanspruch 1 beschriebenen Art finden sich in der DE-Z-Industrieanzeiger 72/1992, S.86-88 und auch in der DE-Z-Energie & Automation 11 (1989), S.4-8.

Eine programmierbare Anpaßsteuerung als NC-Bestandteil findet sich in der DE-Z-Werkstatt und Betrieb 112 (1979) 8, S.515-520.

Bei freiprogrammierbaren Steuerungen auf der Basis von Prozeßrechnern bzw. Mikrocomputern kann der Inhalt des Programmspeichers (RAM) ohne mechanischen Eingriff in das Steuerungsgerät geändert werden. Kommen hingegen Nur-Lese-Speicher (ROM) zum Einsatz, so handelt es sich um eine austauschprogrammierbare Steuerung, bei der die Software nur durch Austausch eines Speicherbausteines verändert werden kann.

Für speicherprogrammierte Steuerungen haben sich im Stand der Technik die Abkürzungen SPS bzw. PLC (Programable Logic Controller) durchgesetzt. Solche speicherprogrammierten Steuerungen (vgl. den oben zitierten Stand der Technik gemäß M. Weck) sind ohne das sogenannte Verknüpfungsprogramm nicht arbeitsfähig. Das Programm ist in einem Programmspeicher enthalten und setzt sich aus den einzelnen Anweisungen zusammen. Eine Anweisung enthält die sogenannte Operation und den Parameter. In der Regel ist der Parameter die Nummer (Adresse) einer Ein- oder Ausgangsstufe, an der z.B. ein Endschalter oder ein Magnetventil angeschlossen ist. Die Operation gibt an, wie der Parameter verarbeitet werden soll.

Speicherprogrammierte Steuerungen arbeiten taktgesteuert, es wird also eine Anweisung nach der anderen abgearbeitet (seriell).

Das Programm einer SPS (PLC) kann z.B. als Kontaktplan, Funktionsplan oder in Form einer Anweisungsliste oder auch als Ablaufplan geschrieben werden (vgl. den zitierten Stand der Technik, S.93 und S.151).

In der Zeitschrift "Energie & Automation", Nr.11 (1989), S.4, 5 (Aufsatz von W. Kanzler) sind gattungsgemäße programmierbare Computersteuerungen beschrieben, bei denen eine Änderung bzw. eine Erweiterung der Maschinenfunktionen durch einen Eingriff in das CNC-Systemprogramm mittels eines EEPROM-Befehls und eines zusätzlichen PC möglich ist.

In der Zeitschrift "Industrie-Anzeiger", 72/1991, S.86 - 88 (Aufsatz von S. Wittenburg) werden programmierbare Computersteuerungen mit getrennten CNC- und SPS-Einheiten beschrieben. Für die SPS (PLC) und die CNC können gemeinsame oder auch getrennte Prozessoren eingesetzt werden. Dort wird vorgeschlagen, eine Steuerung mit getrennten Prozessoren für SPS und CNC vorzusehen.

Die EP 0 466 940 A1 zeigt eine programmierbare Computersteuerung mit einem zusätzlichen externen Anpaßsteuermodul (PMC). Das externe Anpaßsteuermodul ist mit einem internen Anpaßsteuermodul der Computersteuerung verbunden. Das Steuerprogramm für das externe Anpaßsteuermodul wird in einem speziellen Testmodus erstellt und getestet. In diesem Testmodus ist das externe Anpaßsteuermodul nicht mit der programmierbaren Computersteuerung verbunden.

Die vorliegende Erfindung betrifft das Problem der Ausgestaltung einer programmierbaren Computersteuerung derart, daß bei einer zunächst gegebenen Computersteuerung später Änderungen der Steuerung erwünscht sind, insbesondere Änderungen dahingehend, daß die Maschinenfunktionen (also die Bearbeitungsmöglichkeiten der gegebenen Werkzeugmaschine) erweitert werden.

Dieses Problem stellt sich beim gattungsgemäßen Stand der Technik mit programmierbaren Computersteuerungen, die einen CNC-Teil und einen sogenannten Anpaßsteuerteil (PLC bzw. SPS) aufweisen, wie folgt dar:

Wie oben erläutert, besteht bei solchen CNC-Werkzeugmaschinen die Steuerung aus dem sogenannten CNC-Teil, der das Bearbeitungsverfahren des betreffenden Werkstückes betrifft, und dem sogenannten Anpaßsteuermodul (PLC bzw. SPS), welches die Steuerung der Maschinen- und Maschinenhilfsfunktionen betrifft. Der CNC-Teil verarbeitet mittels eines Compilers ein NC-Teileprogramm (bezogen auf das gegebene Werkstück) und setzt dieses in Achsbewegungsbefehle für die Werkzeugmaschine um, um am Werkstück die gewünschten Bearbeitungsschritte vorzunehmen. In einem solchen sogenannten NC-Teileprogramm sind auch Befehle enthalten, die in das Anpaßsteuermodul (PLC bzw. SPS) eingegeben werden, d.h. es besteht eine Schnittstelle (Kommunikationsfenster oder BUS) zwischen dem CNC-Teil und dem Anpaßsteuermodul (PLC). Die vorstehend genannten, im NC-Teileprogramm enthaltenen Befehle werden durch ein im Anpaßsteuermodul fest abgelegtes PLC-Systemprogramm in Maschinenoperationen wie z.B. Werkzeugwechsel, Spannmittel auf/zu etc. umgesetzt.

Soll nun beim Stand der Technik eine Ergänzung (Erweiterung) solcher Maschinenhilfsfunktionen (aufgrund einer Erweiterung der Werkzeugmaschine selbst) vorgenommen werden, so muß das PLC-Systemprogramm durch einen spezialisierten PLC-Programmierer des Maschinenherstellers oder durch ein spezialisiertes Softwarehaus funktional angepaßt werden. Dies kann geschehen durch Austausch des Speicherbausteins, der das Systemprogramm des Anpaßsteuerteils enthält, oder auch durch eine neue Programmierung mittels entsprechender Einrichtungen. Dies ist apparativ und personell sehr aufwendig.

Der Erfindung liegt die Aufgabe zugrunde, eine programmierbare Computersteuerung der eingangs genannten Art so auszugestalten, daß eine Erweiterung der Steuerung hinsichtlich zusätzlicher Maschinen- und Maschinenhilfsfunktionen mit geringem gerätetechnischem Aufwand und geringen Anforderungen an das Bedienungspersonal ermöglicht ist.

Erfindungsgemäß wird diese Aufgabe bei einer programmierbaren Computersteuerung der eingangs genannten Art gelöst durch zumindest ein weiteres Anpaßsteuermodul, welches über eine weitere Schnittstelle mit dem CNC-Teil verbunden ist und in dem ein weiteres Systemprogrammteil abspeicherbar ist, mit dem weitere vom CNC-Teil empfangene Steuerbefehle in erweiterte Maschinenbewegungen umsetzbar sind, wobei es möglich ist, Systemprogrammteile für das weitere Anpaßsteuermodul aus dem Speicher des CNC-Teils abzurufen und in das Anpaßsteuermodul zu übertragen.

Durch die vorstehend genannten erfindungsgemäße Maßnahmen ist es möglich, Systemprogrammteile für das weitere Anpaßsteuermodul auch im CNC-Teil zu verarbeiten. Somit ist das Erstellen und Übertragen der genannten PLC-Systemprogrammteilen mit allen Hilfsmitteln durchführbar, die auch zum Erstellen eines NC-Teileprogrammes (auch als NC-Steuerprogramm bezeichnet) zur Verfügung stehen.

Grundsätzlich ist es auch beim Stand der Technik möglich, eine Erweiterung der Steuerung hinsichtlich zusätzlicher Maschinenfunktionen durchzuführen (etwa beim Stand der Technik gemäß der oben zitierten Zeitschrift DE-Z-Industrie-Anzeiger 72/1992 oder der DE-Z-Energie & Automation 11 (1989)). Dort ist jedoch ein erheblich größerer Aufwand erforderlich und überdies sind auch Nachteile gegeben:
- Beim Stand der Technik ist bei einer Ergänzung bzw. Erweiterung der Steuerungsfunktionen ein Austausch des Systemprogrammspeichers notwendig (also ein Eingriff in die Systemsoftware), und
- will man beim Stand der Technik einen solchen Eingriff vermeiden, so ist der Anschluß einer zusätzlichen Programmiereinrichtung notwendig, welche die erweiterte Steuerfunktion und deren Programmierung ermöglicht. Hieraus ergeben sich jedoch Anpassungsprobleme.

In beiden Fällen muß (beim Stand der Technik) der Ablauf des Teileprogramms unterbrochen werden.

Bei der erfindungsgemäßen Lösung ist dieser Nachteil nicht mehr gegeben. Mit der Erfindung ist es vielmehr möglich, über das CNC-Teileprogramm während der Abarbeitung eines gewöhnlichen oder speziellen CNC-Teileprogrammes das PLC-Systemprogramm neu zu erstellen, zu modifizieren oder zu ändern.

Damit ist es möglich, PLC-Programme über Datenträger, Schnittstellen und eine Vernetzung zu speichern, zu übertragen und/oder zu verarbeiten. Dies geschieht über die bei dem CNC-Teileprogramm gebräuchlichen Einrichtungen und Strukturen.

Ein wesentlicher Vorteil der erfindungsgemäßen Lösung liegt also darin, daß ein PLC-Systemprogramm genauso flexibel handhabbar wird wie das CNC-Teileprogramm.

Bei den heute üblichen CNC-Steuerungen sind Speicherplätze für ein Anpaßsteuermodul für eine Erweiterung vorgesehen und werden im Bedarfsfall genutzt. Das zweite Anpaßsteuermodul kann aber auch im Bedarfsfall gesteckt werden (im RAM-Bereich).

Gemäß einer bevorzugten Ausgestaltung der Erfindung ist vorgesehen, daß die in den Anpaßsteuermoduln (PLC I, PLC II) abgespeicherten Systemprogrammteile wahlweise in den CNC-Teil übertragbar und dort speicherbar und/oder verarbeitbar sind. Die PLC-Systemprogrammteile werden im Objektcode in den Anpaßsteuermoduln abgespeichert, wobei der Objektcode im CNC-Teil mittels des dort vorhandenen Compilers generiert wird.

Die in den zumindest zwei Anpaßsteuermoduln (PLC I, PLC II) gespeicherten Systemprogrammteile können somit zusammengefaßt und nacheinander zyklisch (als eine Programmeinheit) abgearbeitet werden.

Mit der erfindungsgemäßen programmierbaren Computersteuerung ist es möglich, in den NC-Steuerprogrammen des CNC-Teils (auch als NC-Teileprogramme bezeichnet) Befehle und Strukturen zu übertragen und zu speichern und mittels eines sogenannten Dialoggenerators im Anpaßsteuerteil oder auch im CNC-Teil neue Bildschirmbilder zu generieren. Dies sind insbesondere: Generierung von Bildschirmmasken, Generierung von Konstanten-Feldern, Generierung und Zuweisung von Variablen-Feldern, Generierung und Zuweisung von Piktogrammen, Generierung von Alarmen in Fenstern mit freier Alarmtextzuordnung und eine freie Softkey-Text-Zuordnung mit zugehöriger Dialogsteuerung.

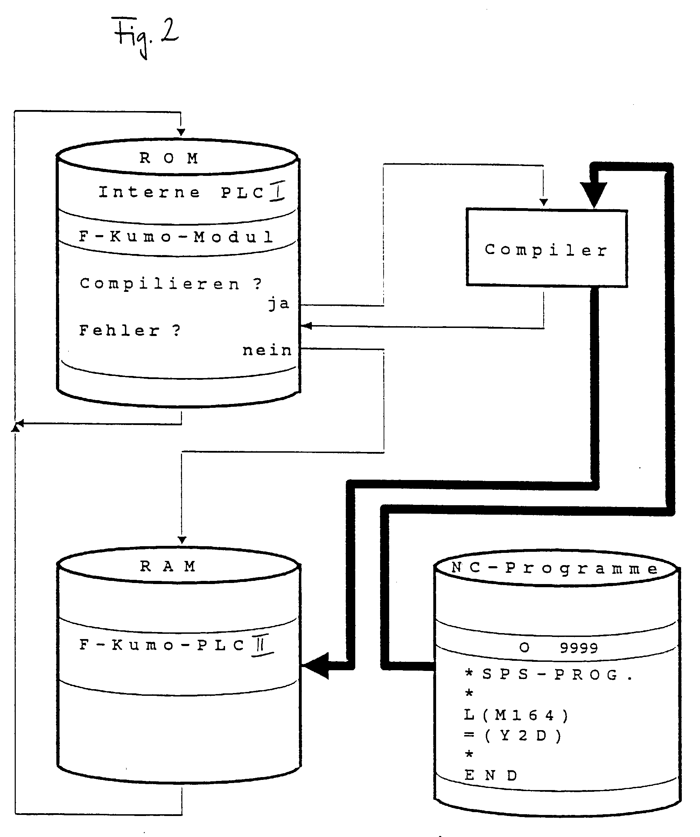

Das Zusammenwirken des zusätzlichen Anpaßsteuermoduls mit dem Dialoggenerator ist wie folgt: die heute üblichen dialogorientierten NC-Steuerungen für Werkzeugmaschinen weisen für die Dialogführung auf der Bildschirmoberfläche einen sogenannten Dialoggenerator auf. Durch die erfindungsgemäße Anordnung des zusätzlichen Anpaßsteuermoduls kann mit Hilfe eines Compilers die NC-Erweiterung (Erweiterung B, siehe unten) in einen PLC-Objektcode generiert und somit Bestandteil des "normalen" PLC-Teileprogramms werden. Mit Hilfe des Dialoggenerators können daraus jetzt Bildschirmbilder für die Erweiterungsfunktion mit entsprechenden Softkeys mit beliebigem Text belegt werden. Auf diese Weise wird die F-KUMO-Programmebene (siehe unten Beschreibung anhand Fig.2) wie eine normale Dialogsteuerung handhabbar. Die Bildschirmoberflächen werden flexibel gestaltet, gespeichert und ablauf fähig.

Gemäß einer weiteren bevorzugten Ausgestaltung der Erfindung ist eine Einrichtung vorgesehen, um aus einem im Objektcode vorliegenden Systemprogrammteil eines Anpaßsteuermoduls (PLC I, PLC II) einen Kontaktplan zu erzeugen und auf einem Bildschirm anzuzeigen. Ein derart erzeugter Kontaktplan (vgl. den eingangs zitierten Stand der Technik) kann zur Kontrolle des gemäß der Erweiterung der Maschinenfunktionen zusätzlich programmierten Systemprogrammteils (also dem zusätzlich programmierten PLC-Code) herangezogen werden, wobei der dargestellte Kontaktplan das fest vorgegebene, ursprüngliche Systemprogrammteil des ersten Anpaßsteuermoduls (PLC I) und gleichzeitig auch das zusätzliche weitere Systemprogrammteil des weiteren Anpaßsteuermoduls (PLC II) gemäß der Maschinenerweiterung in der Darstellung beinhaltet.

Eine weitere bevorzugte Ausgestaltung der Erfindung sieht vor, daß in den Steuerprogrammen des CNC-Teils Zustände insbesondere von frei wählbaren Merkern und Ein-/Ausgängen festlegbar sind, um insbesondere Programmverzweigungen oder Unterprogrammaufrufe festzulegen. Dies betrifft die oben bereits erwähnte Programmierung von Compileranweisungen. Diese müssen gegenüber den normalen SPS-Anweisungen speziell gekennzeichnet werden, um für den Compiler erkennbar zu sein. Mit Hilfe des Compilers und des Programmgenerators kann im Rahmen der Dialogführung bei einer Erweiterung der Steuerungsfunktionen eine erweiterte Bedienoberfläche (gesonderte Bilder) mit entsprechenden Softkeys generiert werden. Jeder Softkey liegt auf einem Merker, der bei der Auswahl gesetzt wird und bei Abwahl oder der Anwahl eines anderen Softkeys zurückgesetzt wird.

Während beim Stand der Technik bei Erweiterungs- oder Änderungsmaßnahmen der Bearbeitungsablauf für eine bestimmte Zeit unterbrochen werden muß, ist bei einer erfindungsgemäßen Steuerung eine solche zeitliche Unterbrechung vermeidbar. Hierzu ist es möglich, in einer erfindungsgemäßen CNC-Steuerung ein CNC-Programm abzuarbeiten, welches beispielsweise ein Systemprogrammteil "A" eines ersten Anpaßsteuermoduls benutzt. Dabei können im NC-Steuerprogramm bereits Befehle und Anweisungen enthalten sein, die während des genannten Ablaufs ein weiteres Systemprogrammteil "B" für den weiteren Anpaßsteuermodul erzeugen.

Gemäß einer weiteren bevorzugten Ausgestaltung der Erfindung ist vorgesehen, daß in den Anpaßsteuermoduln (PLC I, PLC II) eine Mehrzahl von Systemprogrammteilen abgespeichert sind, aus denen ein NC-Steuerprogramm eines oder mehrere auswählen kann.

Nachfolgend wird anhand der Zeichnung ein Ausführungsbeispiel der Erfindung erläutert. Es zeigt:
- Fig.1: schematisch eine programmierbare Computersteuerung für eine Werkzeugmaschine, die um eine weitere Maschinenfunktion oder Maschinenhilfsfunktion erweitert ist und
- Fig.2: schematisch den Ablauf eines bedienerseitigen Eingriffs in ein Systemprogrammteil eines Anpaßsteuermoduls (PLC).

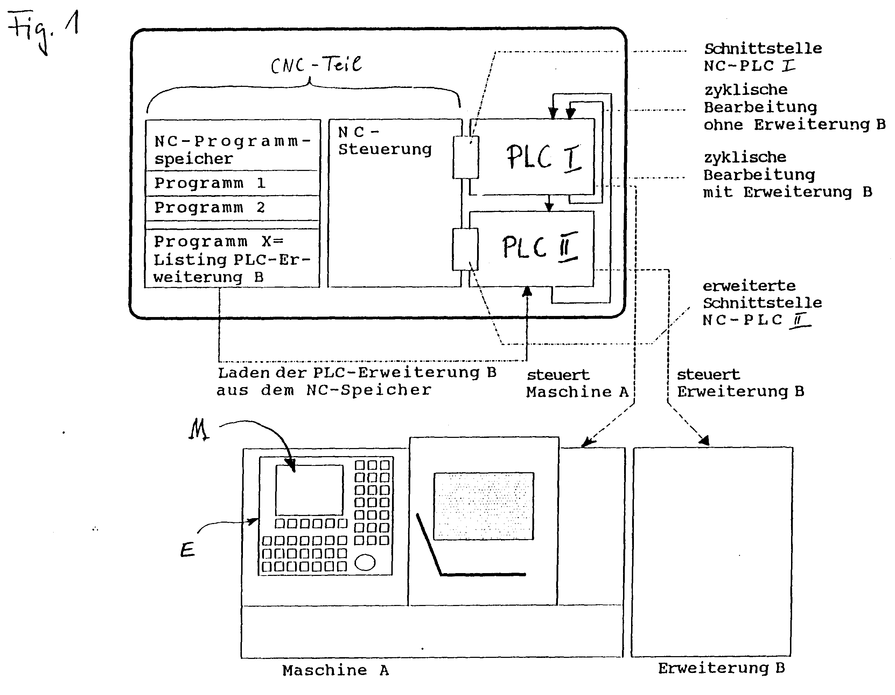

Gemäß Fig.1 soll eine gegebene Werkzeugmaschine A um eine bestimmte Sonderfunktion erweitert werden. Die Erweiterung ist im Blockdiagramm gemäß Fig.1 durch das Kästchen "B" schematisch angedeutet.

Die programmierbare Computersteuerung für die Werkzeugmaschine A und ihre Erweiterung B weist im wesentlichen einen CNC-Teil und beim dargestellten Ausführungsbeispiel zwei Anpaßsteuermoduln PLC I und PLC II auf. Wie durch gestrichelte Linien und Pfeile angedeutet ist, steuert das Anpaßsteuermodul PLC I, welches zunächst für die Maschine A vorgegeben wird, die Maschine A, während das weitere, zusätzliche Anpaßsteuermodul PLC II die zusätzliche, erweiterte Maschinenfunktion B steuert.

Der CNC-Teil weist einen sogenannten NC-Programmspeicher auf, in dem verschiedene Programme abgespeichert sind, beim dargestellten Ausführungsbeispiel die Programme 1 und 2 sowie ein weiter unten noch näher erläutertes Programm X. Die Programme 1 und 2 stehen symbolisch für eine Vielzahl von abgespeicherten Programmen. Das Programm X enthält bereits ein sogenanntes Listing für die geplante Erweiterung B der Werkzeugmaschine.

Ferner weist das CNC-Teil eine als solche bekannte NC-Steuerung auf, in der ein Compiler enthalten ist, welcher ein NC-Steuerprogramm (beispielsweise das vorstehend genannte Programm 1) aus dem Sourcecode in einen Objektcode umsetzt und somit beispielsweise entsprechende Achsbewegungsbefehle für die Maschine erzeugt. Der CNC-Teil übernimmt somit (in an sich bekannter Weise) die Aufgabe der Bewegungssteuerung für die Maschine. Dies sind z.B. die Interpolation der Maschinenachsen, die Lageregelung, die Geschwindigkeit etc. Die Anpassung an die gegebene Maschine erfolgt mittels speicherprogrammierter Steuerungen, die in den Anpaßsteuermoduln PLC I, PLC II enthalten sind. Somit erfolgt die eigentliche (direkte) Steuerung der Maschine über die zwischen das CNC-Teil und die Maschine A bzw. ihre Erweiterung B geschalteten Anpaßsteuermoduln PLC I und PLC II. Wie dargestellt ist, ist zwischen dem CNC-Teil und dem zusätzlichen, nachträglich nachrüstbaren Anpaßsteuermodul PLC II eine zusätzliche erweiterte Schnittstelle NC-PLC II vorgesehen, die neben die zunächst nur vorgesehene Schnittstelle NC-PLC I tritt. Im NC-Steuerprogramm (beispielsweise Programm 1 oder Programm 2 etc.) sind somit bereits Steuerbefehle an die PLC I enthalten, welche über die Schnittstelle (beispielsweise ein sogenannten Kommunikationsfenster oder ein BUS) an das Anpaßsteuermodul weitergereicht werden. Diese Befehle werden durch ein im Anpaßsteuermodul fest abgelegtes Systemprogramm in Maschinenhilfsbewegungen, wie beispielsweise "Werkzeugwechsel", "Spannmittel auf/zu" etc. umgesetzt.

Für die Erweiterung "B" der Maschinenhilfsfunktionen ist nun steuerungsseitig das besondere Anpaßsteuermodul PLC II vorgesehen, welches mit dem CNC-Teil über die genannte zusätzliche (erweiterte) Schnittstelle NC-PLC II verbunden ist. Damit ist ein direkter Zugriff vom CNC-Teil auf das Anpaßsteuermodul PLC II möglich. Der NC-Programmspeicher des CNC-Teils enthält bereits herstellerseitig vorab ein besonderes Programm X, welches ein Listing für die vorgesehene Programmierung des weiteren Anpaßsteuermoduls PLC II enthält. Mittels der Eingabeeinrichtung E wird ein entsprechender Befehl in den CNC-Teil eingegeben und entsprechend wird die Erweiterung gemäß Programm X aus dem NC-Programmspeicher des CNC-Teils in das zusätzlich Anpaßsteuermodul PLC II überführt, was in Fig.1 durch eine gestrichelte Linie mit Pfeil dargestellt ist.

Ohne die Erweiterung und ohne geladenes Anpaßsteuermodul PLC II erfolgt die Ablaufsteuerung zyklisch ohne Einschluß des zusätzlichen Anpaßsteuermoduls PLC II, wie der mit durchgezogener Linie gezeichnete Pfeil "zyklische Bearbeitung ohne Erweiterung B" darstellt. Mit geladenem Anpaßsteuermodul PLC II erfolgt die zyklische Bearbeitung gemäß dem erweitertem, mit durchgezogener Linie gezeichneten Pfeil "zyklische Bearbeitung mit Erweiterung B".

Fig.2 zeigt schematisch den Ablauf eines bedienungsseitigen Eingriffs bei einer Erweiterung einer Maschine A um die oben genannte Erweiterung B.

Das zusätzliche Systemprogrammteil für das zusätzliche Anpaßsteuermodul PLC II kann entweder vor Ort an der Maschine mit Hilfe eines als solches bekannten NC-Programmeditors eingegeben werden oder an einem entfernten NC-Programmierplatz erstellt und mit anschließender Datenübertragung zur Maschine gebracht werden. Das NC-Steuerprogramm ist unter einer Programmnummer im NC-Programmspeicher abgelegt. Mit Hilfe des Compilers wird aus diesem NC-Steuerprogramm ein Objektcode für das Anpaßsteuermodul generiert. Der erzeugte PLC-Objektcode wird an die vorhandenen integrierten Systemprogrammteile im vorhandenen Anpaßsteuermodul PLC I angehängt und wird somit ein Teil der PLC-Steuerung.

Ziel der Erfindung ist es also, das ansonsten fest fixierte PLC-Systemprogramm so flexibel und handhabbar zu machen wie ein übliches CNC-Teileprogramm. Dies soll auch bei Erweiterung mit einem zusätzlichen Steuerungsmodul möglich sein. Im Source-Programm ist ein Programm X = "listing PLC-Erweiterung" vorgesehen und abgelegt. Das zusätzliche Systemprogramm soll dann durch die erfindungsgemäße Einrichtung wie ein "normaler" Editiervorgang handhabbar sein.

Die Funktionsweise des Compilers ist wie folgt: Der Compiler wird normalerweise automatisch mit einer hierfür vorgesehenen Taste aufgerufen. Er sucht den Programmspeicher nach einem Programm mit einer bestimmten Nummer ab, hier das Programm mit der Nummer X. In diesem NC-Programm steht der Sourcecode des zukünftigen, zusätzlichen Systemprogrammteils des Anpaßsteuermoduls PLC II. Ist eine solche Programmnummer "X" nicht vorhanden, wird dies durch einen entsprechenden Hinweis angezeigt und der Compiler bricht ab. Findet sich das Programm "X", wird es eingelesen und die Anweisungszeilen werden in Compiler-Anweisungen, Operationsteil, Operantenteil, Textzuweisung und Kommentare zerlegt. Die Operationsteile und Operantenteile werden vom Compiler in einen SPS-Objektcode generiert und in das RAM des Anpaßsteuermoduls PLC II geschrieben. Während dieses Vorganges erscheint auf dem Bildschirm eine entsprechende Meldung. Erfolgt die Compilierung fehlerfrei, gibt der Compiler den neu generierten Programmteil frei und erzeugt einen entsprechenden Hinweis auf dem Bildschirm M.

Sollte sich in einer oder in mehreren Anweisungszeilen des SPS-Sourcecodes ein Programmierfehler finden, wird das Programm bis zu der ersten fehlerhaften Zeile compiliert. Der Übersetzungsvorgang wird dann abgebrochen und mit einer entsprechenden Meldung wird der Fehler angezeigt. Zusätzlich wird die fehlerhafte Zeile genauer analysiert und eine entsprechende Mitteilung auf dem Bildschirm M gegeben. Solange ein Compilierfehler ansteht, kann die Maschine nicht gestartet werden.

Der Compiler in der NC-Steuerung (des CNC-Teils; Fig.1) ist so gestaltet, daß Befehle für die Anpaßsteuermoduln PLC I und PLC II in den NC-Steuerprogrammen allen Syntax- und Plausibilitätsprüfungen genügen und weiterhin ist der Compiler so gestaltet, daß Befehle in den NC-Steuerprogrammen für die Anpaßsteuermoduln erkannt, geprüft und interpretiert sowie im Speicher markiert werden.

Der zur Steuerung der Maschine A (ohne die Erweiterung B) notwendige SPS-Sourcecode ist im ROM-Speicher des Anpaßsteuermoduls PLC I abgelegt und wird durch den Compiler zyklisch abgearbeitet. Dies entspricht dem durch dünne Pfeile angedeuteten "kurzen" Umlauf des ROM. Ist ein fehlerfreier Compiliervorgang abgeschlossen, wird das zusätzliche Modul "F-KUMO-PLC II" gemäß Fig.2, welches ein RAM aufweist, mit in den zyklischen Ablauf eingeschlossen, d.h. in die SPS-Bearbeitung integriert (der Umlauf erfaßt nun das ROM und das RAM gemäß Fig.2).

Durch die Anordnung des zusätzlichen Anpaßsteuermoduls wird mit Hilfe eines Compilers die NC-Erweiterung (also die oben genannte Erweiterung B) in einen PLC-Objektcode generiert und somit Bestandteil des "normalen" PLC-Teileprogramms. Der Dialoggenerator kann nun daraus Bildschirmbilder für die Erweiterungsfunktion mit entsprechenden Softkeys belegen. Die F-KUMO-Programmebene wird somit genau so wie eine übliche Dialogsteuerung handhabbar. Die Bildschirmoberflächen können flexibel gestaltet, gespeichert und ablauf fähig werden.

Die Compileranweisungen müssen gegenüber den "normalen" SPS-Anweisungen speziell gekennzeichnet werden, um für den Compiler erkennbar zu sein. Mit Hilfe des Compilers und des Programmgenerators kann dann im Rahmen der Dialogführung bei einer Erweiterung der Steuerungsfunktionen eine erweiterte Bedieneroberfläche (gesonderte Bilder) mit entsprechenden zugeordneten Softkeys generiert werden. Jeder Softkey liegt dabei auf einem sogenannten Merker, der bei der Anwahl gesetzt wird und bei einer Abwahl oder der Anwahl eines anderen Softkeys zurückgesetzt wird.

Programmverzweigungen oder Unterprogramme werden üblicherweise durch sogenannte L-Parameter aufgerufen. Um auch bei der vorgesehenen Steuerungserweiterung mit L-Parametern arbeiten zu können, werden diesen Programmteilen intern ebenfalls spezielle "Merker" zugeordnet. Daß heißt: jeder der L-Parameter hat einen zugehörigen Merker im vorhandenen SPS-Programm, dessen Zustand mit dem des Parameters identisch ist. Dieser Vorgang ist nur steuerungsintern notwendig. Für den Bediener der Maschinensteuerung sind diese Parameter wie "normale" L-Parameter handhabbar.

Die vorstehend beschriebene programmierbare Computersteuerung macht es möglich, daß ohne Änderung der Systemsoftware des CNC-Teils oder der Systemsoftware des gegebenen Anpaßsteuermoduls PLC I eine Änderung und/oder Erweiterung der Systemprogramme der Anpaßsteuermoduln möglich ist. Die neue Erstellung, Modifizierung oder Änderung des Systemprogrammteils (PLC-Programm) kann während der Abarbeitung eines NC-Steuerprogramms (Fig.1, Programm 1 oder 2) geschehen oder auch in Form einer speziellen Eingabe eines CNC-Steuerprogrammes.

Damit ist es möglich, Systemprogrammteile für die Anpaßsteuermoduln über Datenträger, Schnittstellen oder eine Vernetzung zu speichern, zu übertragen und zu verarbeiten. Dies ist möglich mittels der für die NC-Steuerprogramme des CNC-Teils gebräuchlichen Einrichtungen und Strukturen, ohne daß weitere Eingriffe erforderlich sind. Damit wird die Veränderbarkeit und Anpaßbarkeit der sonst fest fixierten Systemprogrammteile genauso flexibel und einfach wie die der NC-Steuerprogramme.

In gleicher Weise können Bildschirmbenutzeroberflächen flexibel übertragen, gespeichert und ablauf fähig gestaltet werden.

## Patentansprüche

1. Programmierbare Computersteuerung für eine Werkzeugmaschine mit
- einer vom Benutzer der Computersteuerung betätigbaren Dateneingabeeinrichtung (E), in die Daten eingebbar sind, um Funktionen der Maschine in die Computersteuerung einzugeben und/oder zu ändern,
- einer Anzeigeeinrichtung (M) zum Anzeigen von Meldungen eines Compilers sowie von Bildschirmbildern,
- einem CNC-Teil, in dem eine Mehrzahl von Steuerprogrammen (Programm 1, Programm 2 ..., Programm X) im Sourcecode abgespeichert sind, aus denen mittels des Compilers entsprechend dem mit der Maschine zu bearbeitenden Werkstück NC-Steuerprogramme im Objektcode generiert werden,
- einem ersten zwischen dem CNC-Teil und die Maschine (A) geschalteten Anpaßsteuermodul (PLC I) zur Steuerung der Maschinenfunktionen, wobei über eine erste Schnittstelle (NC-PLC-I) zwischen dem CNC-Teil und dem ersten Anpaßsteuermodul (PLC I) Steuerbefehle von dem CNC-Teil zum ersten Anpaßsteuermodul (PLC I) übertragbar sind,
wobei
mittels im ersten Anpaßsteuermodul (PLC I) abgespeicherter Systemprogrammteile vom CNC-Teil empfangene Steuerbefehle in Maschinenbewegungen umgesetzt werden,
**gekennzeichnet** durch
- zumindest ein weiteres Anpaßsteuermodul (PLC II), welches über eine weitere Schnittstelle mit dem CNC-Teil verbunden ist und in dem ein weiteres Systemprogrammteil abspeicherbar ist, mit dem weitere vom CNC-Teil empfangene Steuerbefehle in erweiterte Maschinenbewegungen umsetzbar sind, wobei
- das weitere Systemprogrammteil für das weitere Anpaßsteuermodul (PLC II) aus dem Speicher des CNC-Teils abrufbar und in das weitere Anpaßsteuermodul (PCL II) übertragbar ist.

2. Programmierbare Computersteuerung nach Anspruch 1, **gekennzeichnet** durch Mittel, um die in den Anpaßsteuermoduln (PLC I, PLC II) abgespeicherten Systemprogrammteile wahlweise in den CNC-Teil zu übertragen und dort zu speichern und/oder zu verarbeiten.

3. Programmierbare Computersteuerung nach einem der Ansprüche 1 oder 2,
**gekennzeichnet** durch Mittel, um die in den zumindest zwei Anpaßsteuermoduln (PLC I, PLC II) abgespeicherten Systemprogrammteile zusammengefaßt nacheinander zyklisch abzuarbeiten.

4. Programmierbare Computersteuerung nach einem der vorhergehenden Ansprüche,
dadurch **gekennzeichnet**, daß eine Einrichtung vorgesehen ist, um aus einem im Objektcode vorliegenden Systemprogrammteil eines Anpaßsteuermoduls (PLC I, PLC II) einen Kontaktplan zu erzeugen und auf einem Bildschirm (M) anzuzeigen.

5. Programmierbare Computersteuerung nach einem der vorhergehenden Ansprüche,
**gekennzeichnet** durch Mittel, um in den Steuerprogrammen des CNC-Teils Zustände insbesondere von frei wählbaren Merkern und Ein-/Ausgängen Festzulegen, um insbesondere Programmverzweigungen oder Unterprogrammaufrufe festzulegen.

6. Programmierbare Computersteuerung nach einem der vorhergehenden Ansprüche,
**gekennzeichnet** durch Mittel, um in den Anpaßsteuermoduln (PLC I, PLC II) eine Mehrzahl von Systemprogrammteilen abzuspeichern, aus denen ein NC-Steuerprogramm eines oder mehrere auswählen kann.

7. Programmierbare Computersteuerung nach einem der vorhergehenden Ansprüche,
dadurch **gekennzeichnet,** daß Einrichtungen vorgesehen sind zum Generieren von Dialogstrukturen auf dem Bildschirm (M), die einen Dialog mit dem weiteren Anpaßsteuermodul (PLC II) ermöglichen.

## Claims

1. A programmable computer control for a machine tool, comprising
- a data input means (E) which can be operated by the user of the computer control, into which data can be entered in order to enter functions of the machine into the computer control and/or to change them;
- a display means (M) for the display of messages from a compiler as well as of screen images;
- a CNC portion wherein a plurality of control programs (program 1, program 2, ..., program X) is stored in the source code, from which NC control programs are generated in the object code by means of the compiler according to the workpiece to be machined in the machine;
- a first matching control module (PLC I) connected between the CNC portion and the machine (A) for controlling the machine functions, with control commands being transmittable via a first interface (NC-PLC I) between the CNC portion and the first matching control module (PLC I) from the CNC portion to the first matching control module (PLC I), with control commands which are received in the CNC portion being converted into machine motions by means of system program parts stored in the first matching control module (PLC I),
characterised by
- at least one additional matching control module (PLC II) which is connected with the CNC portion via an additional interface and in which an additional system program part can be stored, by means of which further control commands received by the CNC portion can be converted into further machine motions, with
- the additional system program part for the additional matching control module (PLC II) being retrievable from the memory of the CNC part and transmittable into the additional matching control module (PLC II).

2. The programmable computer control according to Claim 1,
characterised by means for optionally transmitting the system program parts stored in the matching control modules (PLC I, PLC II) into the CNC portion for storing and/or processing them there.

3. The programmable computer control according to one of Claims 1 or 2,
characterised by means for cyclically executing the system program parts stored in the at least two matching control modules (PLC I, PLC II) in a combined and sequential manner.

4. The programmable computer control according to one of the previous claims,
characterised in that a means is provided for generating a contact plan from a system program part in the object code of a matching control module (PLC I, PLC II) and to display same on a screen (M).

5. The programmable computer control according to one of the previous claims,
characterised by means for defining states of freely selectable flags and inputs/outputs in the control programs of the CNC portion, for defining program branches or subroutine calls in particular.

6. The programmable computer control according to one of the previous claims,
characterised by means for storing a plurality of system program parts in the matching control modules (PLC I, PLC II), from which one or several can be selected by an NC control program.

7. The programmable computer control according to one of the previous claims,
characterised in that means are provided for generating dialog structures on the screen (M), which enable a dialog with the additional matching control module (PLC II).

## Revendications

1. Commande programmable par ordinateur pour une machine outil comprenant
- un dispositif d'introduction de données (E) pouvant être actionné par l'utilisateur de la commande par ordinateur, dans lequel des données peuvent être introduites pour introduire et/ou modifier des fonctions de la machine dans la commande par ordinateur,
- un dispositif d'affichage (M) pour l'affichage de messages d'un compilateur ainsi que d'images d'écran,
- une partie CNC dans laquelle sont stockés en mémoire une pluralité de programmes de commande (Programme 1, Programme 2 ..., Programme X) en code source à partir desquels des programmes de commande NC en code objet correspondant à la pièce à usiner avec la machine sont générés au moyen du compilateur,
- un premier module de commande d'adaptation (PLC I) monté entre la partie CNC et la machine (A) pour la commande des fonctions de la machine, des ordres de la partie CNC pouvant être transmis au premier module de commande d'adaptation (PLC I) par une première interface (NC-PLC-I) entre la partie CNC et le premier module de commande d'adaptation (PLC I), des ordres reçus en provenance de la partie CNC étant convertis au moyen de parties de programme d'exploitation stockées en mémoire dans le premier module de commande d'adaptation (PLC I) en mouvements de machine,
caractérisée par
- au moins un module de commande d'adaptation supplémentaire (PLC II) qui est relié à la partie CNC par l'intermédiaire d'une interface supplémentaire et dans lequel peut être stockée en mémoire une partie de programme d'exploitation supplémentaire avec laquelle des ordres supplémentaires reçus de la partie CNC peuvent être convertis en des mouvements de machine étendus,
- la partie de programme d'exploitation supplémentaire pour le module de commande d'adaptation supplémentaire (PLC II) pouvant être extraite de la mémoire de la partie CNC et pouvant être transférée dans le module de commande d'adaptation supplémentaire (PLC II).

2. Commande programmable par ordinateur selon la revendication 1,
caractérisée par des moyens pour transférer de façon sélective dans la partie CNC et y stocker en mémoire et/ou y exécuter des parties de programme d'exploitation stockées en mémoire dans les modules de commande d'adaptation (PLC I, PLC II).

3. Commande programmable par ordinateur selon l'une des revendications 1 ou 2,
caractérisée par des moyens pour traiter cycliquement l'une après l'autre de façon enchaînée les parties de programme d'exploitation stockées en mémoire dans les au moins deux modules de commande d'adaptation (PLC I, PLC II).

4. Commande programmable par ordinateur selon l'une quelconque des revendications précédentes,
caractérisée en ce qu'il est prévu un moyen pour générer à partir d'une partie de programme d'exploitation présente en code objet d'un module de commande d'adaptation (PLC I, PLC II) un plan de contact et pour l'afficher sur un écran (M).

5. Commande programmable par ordinateur selon l'une quelconque des revendications précédentes,
caractérisée par des moyens pour fixer dans les programmes de commande de la partie CNC des états en particulier de drapeaux et d'entrées / sorties pouvant être choisis librement, pour spécifier des branchements de programmes ou des appels de sous-programmes.

6. Commande programmable par ordinateur selon l'une quelconque des revendications précédentes,
caractérisée par des moyens pour stocker en mémoire dans les modules de commande d'adaptation (PLC I, PLC II) une pluralité de parties de programme d'exploitation dans lesquelles un programme de commande NC peut en choisir une ou plusieurs.

7. Commande programmable par ordinateur selon l'une quelconque des revendications précédentes,
caractérisée en ce que des moyens sont prévus pour générer des structures de dialogue sur l'écran (M) qui permettent un dialogue avec le module de commande d'adaptation supplémentaire (PLC II).
